# EUROPEAN PATENT SPECIFICATION

(11) **EP 0 441 444 B1**
(45) Date of publication and mention of the grant of the patent: **01.12.1993**
(21) Application number: 91200234.2
(22) Date of filing: 06.02.1991
(51) Int. Cl.: B65G 47/68, B65G 47/66

(54) **In-line device with overflow plate**
Vorrichtung zum Aufteilen von Gefässen auf eine einreihige Spur mit einer Übergabeplatte
Dispositif pour grouper des récipients sur une file unique avec une plaque de transfert

(30) Priority: 09.02.1990 NL 9000313
(43) Date of publication of application: 14.08.1991
(73) Proprietor: Speciaal-Machinefabriek J.H. van Uitert B.V., NL-5107 NC Dongen (NL)
(72) Inventor: Van Uitert, Johannes Hendrikus, NL-5109 RB 's-Gravenmoer (NL)
(74) Representative: Lips, Hendrik Jan George, Ir.

(56) References cited:
- EP-A- 0 175 292
- EP-A- 0 237 149
- US-A- 2 180 284
- US-A- 3 610 394

## Description

The invention relates to an in-line device as this is described in the preamble of claim 1.

Such a device is known by EP-A-0 237 149. In case of this known device the run-on side of the overflow plate extends transverse to the center line of the conveyors. By this the containers of a row, which row is making an acute angle with the center line of the conveyors and which containers are nested into each other, will not engage this run-on side in the same way. There is, however, no danger of tumbling of the containers because said overflow plate and said conveyors are provided with openings for drawing a vacuum force through them.

This brings with it that the device is cumbersome and requires a great number of parts, such as a vacuum pump and such like.

Now the object of the invention is to raise these disadvantages and this is obtained by applying the feature as indicated in the characterizing portion of claim 1.

In case of the present invention in particular it will be provided, that the angle which the run-on side and the trailing side of the overflow plate are making with the upstream directed portion of the longitudinal edges, being in line with each other, of the supply and discharge conveyors is about 60°.

It has appeared that in this way it can be obtained that the bottles supplied behind each other will nest oneselves between each other such that near the trailing side of the overflow plate the bottles will be positioned clearly in one row. When now the bottles which are at some distance from the row of bottles to be shaped are engaging the guiding rod, the bottles can be positioned between each other and, if desired, can be positioned at small distance from each other. By this noise nuisance can be prevented to a high degree.

It is obvious that bottles present on the overflow plate have to be moved by bottles coming after them such that when the supply conveyor is stopped or when no bottles are present on it, a number of bottles will stay behind on the overflow plate.

According to a further embodiment of the invention the trailing side of the overflow plate can be provided with recesses at the place of one or more of the rows of bottles moving along the overflow plate, the shape of said recesses being adapted to that of the bottom of a bottle.

By this the last phase of the transition of a bottle from the overflow plate onto the discharge conveyor is accellerated. It has appeared that by this the danger that a bottle will fall over is reduced.

Obviously in this case the overflow plate will be intended for bottles with a diameter within certain limits and that another overflow plate will have to be applied for bottles with a deviating diameter.

According to a further embodiment of the invention the discharge conveyor may consist of a number of parallel running conveyor chains either conveyor belts, the velocity of which can be separately controlled. By this the distance between the bottles present on the discharge conveyor can be further controlled.

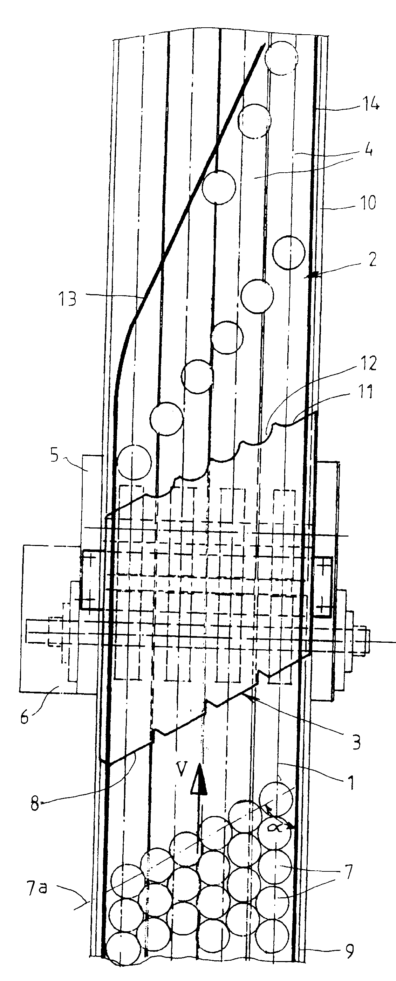

The invention is further described by means of an embodiment shown in the drawing being a schematically plan view of the related device.

The device as shown comprises the supply conveyor 1 and the discharge conveyor 2 with between them the overflow plate 3.

In particular the discharge conveyor 2 may consist of a number of chain or belt conveyors 4, which might be driven with a different speed as by means of the drive device 5. The supply conveyor can be driven by means of the drive device 6 and might also consist of a number of separate chain or belt conveyors which, however, are then driven with the same speed.

The bottles 7, standing on the supply conveyor 1, are moved in the direction of the arrow V and are pressed upon the run-on side 8 of the overflow plate 3 by the bottles coming after them. The shape of the run-on side 8 shown in the drawing is adapted to the normally used conveyor chains to prevent interference between the chain links and the overflow plate.

Because the bottles will be subjected to a given resistance when they are pressed onto the run-on side they will be mutually positioned such that the bottles of the one row will be staggered over half the diameter of the bottle in respect of the bottles of the row standing beside it. In the drawing the position of the foremost row of bottles is indicated by 7a, in which position the bottles on the overflow plate will come to stand. For clearness sake no bottles are shown on the overflow plate. Obviously the angle α, which the line 7a and also the run-on side 8 of the overflow plate 3 is making with the upstream directed portion of the longitudinal edges 9 and 10, being in line which each other, of the supply conveyor 1 and the discharge conveyor 2 respectively, will substantially be 60°. The trailing side 11 of the overflow plate 3 will extend substantially parallel to the run-up side 8 of it. As shown in the drawing the trailing side can be provided with recesses 12 in the shape of a segment of circle, the diameter of it being somewhat larger than the diameter of the bottom of a bottle 7.

To press the bottles 7, coming from the trailing side 11 towards that portion of the discharge conveyor, shown at the right in the drawing, the guiding rod 13 is provided extending obliquely over the discharge conveyor 2 from the one side edge of both conveyors 1 and 2.

Near the longitudinal edges 9 and 10 of both conveyors 1 and 2 the guiding rod 14 is present.

One or both guide rods 13 and 14 can be adjustable in transverse direction, such that no jamming of the bottles between both guiding rods will occur.

To take care for it that always a sufficient number of bottles are present on the supply conveyor 1 and to discharge the bottles at the desired mutual distance by means of the discharge conveyor 2, the velocities of both conveyors might be controlled, e.g. by means of photoelectric cells observing the bottles at various positions. Also the bottles might be supplied to the supply conveyor 2 from a preceding conveyor such that always a sufficient number of bottles is available.

## Claims

1. In-line device comprising a supply conveyor (1) and a discharge conveyor (22) moving at a higher speed than the supply conveyor (1), said supply conveyor (1) serving to supply containers, as in particular bottles (7), in a number of rows standing beside each other to the discharge conveyor (2) through which the containers (7) are discharged in one single row, at least one guiding rod (13) being present running mainly in longitudinal direction of said conveyors (1,2) to transfer said containers (7) in transverse direction in respect of the direction (V) of movement of the conveyors (1,2), the supply conveyor (1) and the discharge conveyor (2) lying in line with each other and at their junction having an equal width after which the discharge conveyor (2) by said guiding rod (13) is narrowed till the width of one single row of containers (7), an overflow plate (3) being present above the conveyors (1,2) at the transition between these, the trailing side (11) of said overflow plate (3) positioned above the discharge conveyor making an acute angle (α) with the center line of the conveyors (1,2),
characterized in that
the run-on side (8) of said overflow plate (3), positioned above the supply conveyor (1), extends parallel to the trailing side (11) of said overflow plate (3) positioned above the discharge conveyor (2).

2. Device according to claim 1,
characterized in that
the trailing side (11) of the overflow plate (3) is provided with recesses (12) at the place of one or more of the rows of containers (7) moving along the overflow plate (3), the shape of said recesses (12) being adapted to that of the bottom of a container (7).

3. Device according to claim 1 or 2,
characterized in that,
the discharge conveyor (2) consists of a number of parallel running conveyor chains either conveyor belts (4),the velocity of which can be separately controlled.

## Patentansprüche

1. In-line-Vorrichtung mit einer Zufuhrfördereinrichtung (1) und einer Entladefördereinrichtung (2), die sich schneller bewegt als die Zufuhrfördereinrichtung (1), wobei die Zufuhrfördereinrichtung (1) der Zufuhr von Behaltnissen (7), insbesondere Flaschen, die in mehreren Reihen nebeneinander stehen, zur Entladefördereinrichtung (2) dient, durch die die Behältnisse (7) in einer einzigen Reihe entladen werden, wobei mindestens eine Führungsstange (13) vorgesehen ist, die sich im wesentlichen in Längsrichtung der Fördereinrichtungen (1, 2) erstreckt, um die Rehältnisse (7) quer zur Bewegungsrichtung (V) der Fördereinrichtungen (1, 2) zu verschieben, wobei die Zufuhrfördereinrichtung (1) und die Entladefördereinrichtung (2) eine in-Line-Anordnung darstellen und an ihrer Verbindungsstelle dieselbe Breite aufweisen, wonach die Entladefördereinrichtung (2) sich durch die Führungsstange (13) auf die Breite einer einzigen Reihe von Behältnissen (7) verengt, und wobei eine Überlaufplatte (3) über den Fördereinrichtungen (1, 2) am Übergang zwischen diesen vorgesehen ist und die Rückseite (11) der Überlaufplatte (3), welche sich über der Entladefördereinrichtung befindet, einen spitzen Winkel (α) mit der Mittellinie der Fördereinrichtungen (1, 2) bildet,
dadurch **gekennzeichnet,**
daß die Vorlaufseite (8) der Überlaufplatte (3), welche über der Zufuhrfördereinrichtung (1) angeordnet ist, sich parallel zur Rückseite (11) der Überlaufplatte (3) erstreckt, die über der Entladefördereinrichtung (2) angeordnet ist.

2. Vorrichtung nach Anspruch 1,
dadurch gekennzeichnet, daß die Rückseite (11) der Überlaufplatte (3) mit Aussparungen (12) an der Stelle einer oder mehrerer der Reihen von Behältnissen (7), die sich entlang der Überlaufplatte (3) bewegen, versehen ist, wobei die Aussparungen (12) in ihrer Form der des Bodens eines Behältnisses (7) angepaßt sind.

3. Vorrichtung nach Anspruch 1 oder 2,
dadurch gekennzeichnet, daß die Entladefördereinrichtung (2) aus einer Anzahl parallel laufender Förderketten oder Förderbänder (4) besteht, deren Geschwindigkeit getrennt steuerbar ist.

## Revendications

1. Dispositif en ligne comprenant un transporteur d'amenée (1) et un transport d'évacuation (2), se déplaçant à une vitesse supérieure à celle du transporteur d'amenée (1), ledit transporteur d'amenée (1) servant à amener des récipients, comme des bouteilles (7) particulières, en un certain nombre de rangées situées les unes à côté des autres, vers le transporteur d'évacuation (2), dans lequel les récipients (7) sont évacués en une seul rangée, au moins une tige de guidage (13) s'étendant principalement dans la direction longitudinale desdits transporteurs (1, 2), pour transférer lesdits récipients (7) dans une direction transversale par rapport à la direction (V) de déplacement des transporteurs (1, 2), le transporteur d'amenée (1) et le transporteur d'évacuation (2) étant alignés entre eux et présentant une même largeur à leur jonction, à la suite de quoi le transporteur d'évacuation (2) est rétréci par la tige de guidage (13), jusqu'à l'obtention de la largeur d'une seule rangée de récipients (7), une plaque de franchissement (3) étant présente au-dessus des transporteurs (1, 2) à la transition entre ces derniers, le côté arrière (11) de ladite plaque de franchissement (3) étant disposé au-dessus du transporteur d'évacuation, en faisant un angle aigu (α) avec l'axe des transporteurs (1, 2),
caractérisé en ce que
le côté avant (8) de ladite plaque de franchissement (3), disposé au-dessus du transporteur d'amenée (1) s'étend parallèlement au côté arrière (11) de ladite plaque de franchissement (3), disposé au-dessus du transporteur d'évacuation (2).

2. Dispositif selon la revendication 1,
caractérisé en ce que
le côté arrière (11) de la plaque de franchissement (3) est pourvu de cavités (12), à l'emplacement d'une ou plusieurs rangées des récipients (7) se déplaçant le long de la plaque de franchissement (3), la forme desdites cavités (12) étant adaptées à celle du fond d'un récipient (7).

3. Dispositif selon la revendication 1 ou 2,
caractérisé en ce que
le transporteur d'évacuation (2) consiste en un certain nombre de chaînes de transport ou de courroies de transport (4) s'étendant parallèlement, dont la vitesse peut être commandée séparément.
